# EUROPEAN PATENT SPECIFICATION

(11) **EP 4 545 148 B1**
(45) Date of publication and mention of the grant of the patent: **25.02.2026**
(21) Application number: 23205422.1
(22) Date of filing: 24.10.2023
(51) Int. Cl.: A62B 35/04, A62B 1/14, A62B 35/00

(54) **FALL ARREST DEVICE**
FALLSCHUTZVORRICHTUNG
DISPOSITIF ANTICHUTE

(43) Date of publication of application: 30.04.2025
(73) Proprietor: SKYLOTEC GmbH, 56566 Neuwied (DE)
(72) Inventor: BONAITI, Mattia, 24030 Caprino Bergamasco (BG) (IT); PEGURRI, Ugo, 24060 Sovere (BG) (IT)
(74) Representative: Michalski Hüttermann & Partner Patentanwälte mbB

(56) References cited:
- CA-C- 2 088 180
- US-A- 4 881 622
- US-A- 5 664 640
- US-A1- 2012 005 863
- US-A1- 2012 012 800
- US-A1- 2014 020 988
- US-A1- 2022 403 898

## Description

The invention relates to a fall arrest device for attachment to a line. The fall arrest device comprises a line receptacle.

The fall arrest device can be used in practice in climbing applications or other applications where a safety measure against falling of a user is needed. Typically, when a user falls, the fall arrest device locks relative to a substantially vertically arranged line typically present in said application and thereby safes the user coupled to the fall arrest device from critical injury. In known fall arrest devices, it is crucial to insert the line into the line receptacle in a certain direction. Therefore, it is of interest to provide measures to prohibit insertion in a wrong direction.

US 2014/020988 A1 discloses a rope grab for a vertical fall protection system. Particularly, it is understood that US 2014/020988 A1 describes a fall arrest device for attachment to a line, comprising a line receptacle and an arrest mechanism with an arrest member for arresting the line in the line receptacle in case of a fall of the user along the line.

US 4 881 622 A discloses a safety grab protection device that both operates bidirectionally for connecting a safety belt lanyard to a vertical safety rope and has contoured cam surfaces that engage the safety rope in such a way that the shape of the braking surfaces engage the rope without damaging it.

US 5 664 640 A discloses an improved cam for use in a rope gripping device features a concave cam working surface.

US 2022/403898 A1 discloses methods and systems for a device that may be configured to automatically grab and slip a line.

US 2012/012800 A1 discloses a pulley with an unlockable clamp, comprising a rotary roller, a pivoting trigger designed to release and clamp the rope against the roller, and control means to keep the trigger in the inactive position disabling action of the clamp.

US 2012/005863 A1 discloses a trigger grip that includes a body comprising an upper jaw extending laterally, a pivot section depending from one end of the upper jaw, and a sleeve section depending from the other end of the upper jaw.

CA 2 088 180 C disclose a further fall arrest device comprising an arrest mechanism, and a separate recessed obstruction element which moves against gravity.

It is therefore an object of the invention to provide solutions with respect to enhancing the fall arrest device in terms of safety. Particularly it is an object to avoid or reduce disadvantages of known solutions.

The object of the invention is solved by the features of the independent claim. Preferred implementations are detailed in the dependent claims, the description and the figures.

The object is solved by a fall arrest device for attachment to a line, comprising
a body with a line receptacle defining a first direction by its extension and for receiving the line with the first direction oriented in parallel to the line,
an obstruction member configured for moving relative to the line receptacle based on the influence of gravity between an obstruction position obstructing the line receptacle and an open position as a function of the first direction oriented against the gravity or following the gravity, and
an arrest mechanism with a coupling member for coupling to a user and with an arrest member for arresting the line in the line receptacle in case of a fall of the user along the line, wherein
the obstruction member has a recess configured for engaging with the line in the obstruction position.

Simply said, the object is particularly solved by a fall arrest device or fall arrester including at least one of: a body with a particularly elongated line receptacle, an obstruction member configured for selectively obstructing the line receptacle as a function of the orientation of the fall arrest device in a field of gravity, an arrest mechanism for arresting the line when the user falls while the line is correctly received in the line receptacle, and a geometry on the obstruction member which can grab the line when the obstruction member obstructs the line receptacle.

Particularly, the present invention suggests a fall arrester that is configured for receiving a line in a receptacle, wherein a movable blocking element in the fall arrester moves into the receptacle in case the fall arrester is wrongfully oriented which would not enable a function in case of a fall, so that the blocking element then makes it impossible to fully insert the line into the receptacle. Thus, the movable blocking element physically blocks the receptacle by means of its volume when the user intends to mount the fall arrester to the line in the wrong direction. The invention proposes that the blocking element is equipped with a geometry or surface that is commonly understood as or commonly reminds in shape of: a recess, corner, crater, cavity, indentation, depression and/or bowl.

By means of the invention and by means of aspects described in the present application, it is advantageously realized that the obstruction member grabs the line in case the fall arrest device is mounted in the wrong direction. Thereby, it is prevented that the obstruction member may be moved by means of the line or other influences like vibration, acceleration or the like. Rather, if a user tries to mount the device wrongfully, the wrongful orientation is safely kept due to the form fit the obstruction member makes with the line until the user corrects it.

Thus, the invention beneficially provides with its features to increase safety.

Fall arrest device or fall arrester or personal fall arrest system relates to a system or apparatus used to arrest a person in a fall from an increased height, e.g. from a working level. It may comprise an anchorage, connectors, a body belt or body harness, a lanyard, deceleration device, lifeline, or suitable combinations of these.

The fall arrest device can be attached to a/the line. Thereby, the fall arrest device holds the line for securing the user in case of a fall relative to the line. By way of attachment, the line may still move relative to the fall arrest device. Particularly, attachment relates to fixing the line relative to the fall arrest device along at least one direction, particularly oblique to the line receptacle and/or line.

The line typically relates to an elongated means like a rope, cord, tightrope, hawser, cable, wire or the like. The line is typically a steel wire rope or steel cable.

The body typically relates to a one- or multi-part component of the fall arrest device. The body may comprise metal, particularly aluminum alloy or steel. The body may serve to hold and/or house and/or provide all mechanical parts necessary for function of the fall arrest device. The body may form and/or comprise the line receptacle. The line receptacle may extend along the body, particularly along the entire body, especially along a substantially straight line. The body may comprise an at least substantially flat shape and/or a thickness between 5 mm and 50 mm, particularly between 10 mm and 25 mm, for provision of sufficient mechanical stability and easy use.

The line receptacle may have a shape to substantially and/or sectionally surround a/the line. The line receptacle may be substantially U-shaped or C-shaped to receive the line via the opening of the U or C. The line receptacle defines the first direction by its extension. The line receptacle particularly defines via the first direction an upwards direction of the fall arrest device in a field of gravity. The line is meant to be received in the line receptacle by being arranged at least substantially in parallel to the line receptacle and/or first direction. The length of the line receptacle is particularly between 20 mm and 200 mm, more particularly between 40 mm and 100 mm, for provision of sufficient stability in reception of the line and an easy use.

The obstruction member particularly is a rigid or solid component of the fall arrest device. The obstruction member particularly comprises or consists of metal, especially steel or aluminum alloy. The obstruction member may be hardened, anodized and/or coated. The obstruction member may have an elongated shape, particularly meaning that one direction of extension of the obstruction member is at least twice as long in the one direction relative to two other directions that are perpendicular to each other and that are perpendicular to the one direction. The obstruction member may be configured for physical obstruction of the line receptacle, especially by means of being selectively movable into the line receptacle and out of the line receptacle. The obstruction member is typically sensitive to gravity in that the direction of gravity may affect its position in the body when the obstruction member is free to move and/or not blocked, e.g. not block by any line.

The obstruction position typically relates to a position of the obstruction member that at least sectionally penetrates the line receptacle, especially in order to obstruct or block the line receptacle physically. The obstruction position may relate to a range or a variety of positions in which the line receptacle is obstructed/blocked. Particularly, the obstruction position relates to a position where the recess can potentially engage with a line (wrongfully) inserted into the line receptacle.

The open position typically relates to a position where the obstruction member is not arranged in the line receptacle or not penetrating the line receptacle, e.g. not affecting the possibility to fully insert the line into the line receptacle for making the fall arrest device work properly. It may be understood that the open position is any position of the obstruction member in which the obstruction position is not present.

The obstruction member may be supported in the body to move between position as a function of the direction of the gravitation / gravitational force. For example, the obstruction member may be supported in the sense of a sled or lever that can slide or pivot between two end positions, e.g. one position being an/the obstruction position and the other position being an/the open position.

The recess may be formed in the obstruction member, especially on a top side. The top side and/or recess particularly face(s) out of the line receptacle, especially when in the obstruction position. The recess may run and/or be configured to run across the line receptacle, especially from a first side towards a second side of the line receptacle, especially in the obstruction position. The recess may be arranged above and/or be configured to be arranged above the bottom of the line receptacle, especially in the obstruction position. The recess may extend oblique to the first direction, especially perpendicular. The recess may extend perpendicular to the shape of the body, especially the shape of the body being substantially flat. The recess may be large enough to at least sectionally surround the line for engagement with the line when in the obstruction position.

The arrest mechanism is particularly configured for selectively making a form fit with the line, especially when a fall occurs. A fall may be present when the coupling member is pulled at with an abrupt force increase, especially at least substantially in against the first direction and/or following gravity. The coupling member and the arrest member may be monolithically joined and/or formed as a common lever. The arrest member is configured for engagement from a side into the line receptacle. The arrest mechanism may be spring-loaded, especially to always slightly slide on the line and/or to automatically pivot towards the line receptacle. The obstruction member may be movably supported in the body. The obstruction member may be pivotable and/or translationally movable in the body, especially between the obstruction position and the open position.

The obstruction member may extend, particularly at least substantially, along a straight line. The obstruction member may extend between a first end, e.g. a back end, and a second end, e.g. a front end, of the obstruction member. The recess may be arranged between said ends. The obstruction member has a back side and a front side. The back side and the front side are at least substantially parallel to one another. In the open position, the front side is arranged to face the line receptacle and/or the back side is arranged to face away from the line receptacle. In the obstruction position, the front side is arranged to at least substantially face in the first direction (e.g. substantially upwards in normal use of the device) and/or the back side may be arranged to at least substantially face against the first direction (e.g. substantially downwards in normal use of the device).

The obstruction member may be pivotably mounted at the first end. The obstruction member may be substantially arranged and/or mounted as a pendulum in the body in order to be affected by the direction of gravity.

The recess extends (particularly in depth) along a second direction perpendicular to the first direction. The recess extends (particularly in depth) along a/the second direction perpendicular to the straight line along which the obstruction member may extend. The recess extends in length along the straight line along which the obstruction member extends.

The obstruction member, especially the second end or front end, may comprise a protrusion extending at least substantially along a/the second direction, which second direction is perpendicular to the first direction. The protrusion substantially serves to grasp the line in the obstruction position. The protrusion may be monolithically formed with the obstruction member.

The protrusion may have an at least sectionally curved side surface forming a side of the recess. The side surface may be configured to contact the line in terms of area or with a linear contact. The protrusion may have an at least sectionally flat side surface forming a side of the recess. The side surface may be configured to contact the line in terms of area or with a linear contact. The side surface may be curved and/or flat along at least one direction or along two or more directions. Typically, the top of the protrusion may be flat.

The recess may have a curved and/or flat top surface. The top surface may be configured to contact the line in terms of area or with a linear contact. The recess may have an inclined top surface. The top surface may be configured to contact the line with a punctual contact. The recess may have a tapered top surface. The top surface may be configured to contact the line with a punctual contact. The top surface may be curved and/or flat and/or tapered and/or inclined along at least one direction or along two or more directions.

The body may have a base member. The base member may monolithically form a first side and/or a bottom of the receptacle, e.g. in one piece and/or in a bent section. The first side may be concave on an inner surface. The inner surface may extend at least sectionally along the receptacle, e.g. in order to sectionally surround the line. The body may have a substantially flat shape, particularly with the line receptacle arranged running along one flat side.

The fall arrest device may comprise a rotatable line guide configured for guiding a/the line received in the line receptacle. The line guide may have a roller configured for guiding the line received in the line receptacle. The line guide may be pivotable especially together with the rotatable roller between a mounted position to sectionally surround the line and a dismounted position to release the line. In the mounted position, the line guide may lock the line in the line receptacle so that the line cannot leave the line receptacle and/or is obstructed from leaving it. The line guide may reduce friction in use of the device.

The arrest mechanism may be spring-loaded. The line guide may be spring-loaded. The spring load may be provided for the arrest mechanism and/or the line guide to automatically move towards the line receptacle. For example, the line guide may be arranged above the obstruction member and the arrest mechanism may be arranged below the obstruction member, especially considered along the first direction. The line guide may be configured to block the arrest mechanism from being fully opened unless the line guide is in the dismounted position. The line guide and the arrest mechanism may be configured to mechanically cooperate with each other. The arrest mechanism may comprise a groove configured to run along the line receptacle for making a contact in terms of area with the line.

The obstruction member and/or the body may comprise or consist of steel and/or aluminum alloy. The line guide, the obstruction member and/or the arrest mechanism is/are arranged on a second side of the line receptacle opposite the first side. Particularly, in a view along the line and/or on an end of the line receptacle, the line receptacle may have at least substantially/sectionally a U-shape and/or a C-shape in order to surround the line sectionally during reception of the line.

The term 'or' may be replaced by 'and/or' throughout the present disclosure. As such, where 'or' is used, it is not necessarily meant that merely alternatives are named.

These and other aspects of the invention will be apparent from and elucidated with reference to the implementations described hereinafter.

In the drawings:
Fig. 1 shows a fall arrest device with a first direction pointing against gravity in a schematic side view;
Fig. 2 shows the fall arrest device of Fig. 1 with the first direction following gravity with an obstruction member obstructing a line receptacle in a schematic side view;
Fig. 3A-B shows the fall arrest device of Fig. 1 with the first direction pointing upwards when a line is received in the line receptacle in a schematic side view (A) and in a sectional view perpendicular to the line (B);
Fig. 4A-B shows the fall arrest device of Fig. 1 with the first direction pointing downwards when a line is engaged with an obstruction member in a schematic side view (A) and in a sectional view perpendicular to the line (B);
Fig. 5A-B shows a further embodiment of a fall arrest device with an obstruction member that is translationally movable and with a first direction pointing against gravity (A) or following gravity with the obstruction member obstructing a line receptacle (B) in a schematic side view;
Fig. 6A-D shows sectional views perpendicular to a first direction of embodiments of a fall arrest devices with differently shaped recesses in an obstruction member;
Fig. 7A-E shows a top view (A) and sectional views (B, C, D, E) of embodiments of obstruction members for a fall arrest device; and
Fig. 8A-C shows a top view of embodiments of obstruction members for a fall arrest device with differently shaped protrusions.

The description contains procedural or methodical aspects upon describing structural features of the invention; the structural features can be understood well in that way. It is emphasized to the reader that such structural features can be lifted from the described context without hesitation or the question of an intermediate generalization to form aspects of the disclosure. It is also emphasized to the reader that any the structural features described in the following can be understood as individual aspects of the disclosure to distinguish from known solutions, despite being possibly lifted from the context. The scope of protection is defined solely by the appended claims.

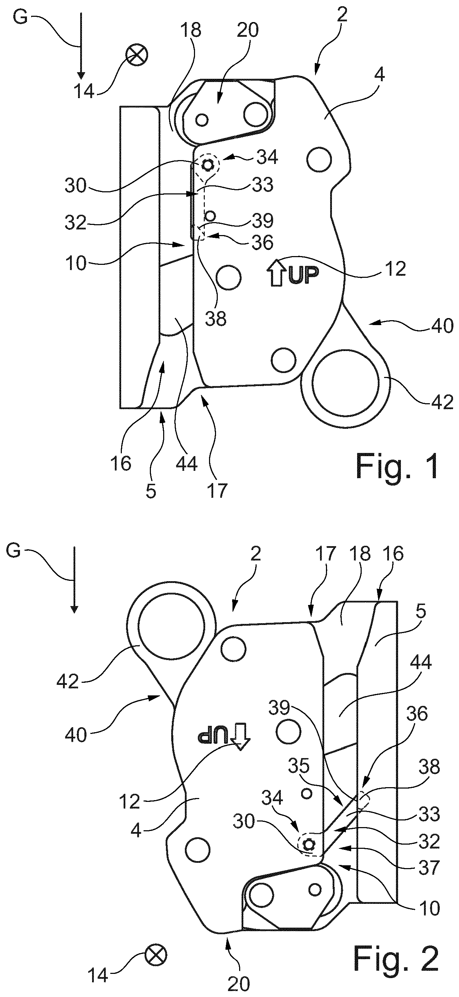

Figs. 1 to 4 disclose a fall arrest device 2 for attachment to a line 1. The device 2 comprises a body 4 with a line receptacle 10 defining a first direction 12 by its extension and for receiving the line 1 with the first direction 12 oriented in parallel to the line 1. The device 2 furthermore has an obstruction member 30 that can block the receptacle 10 from receiving the line 1.

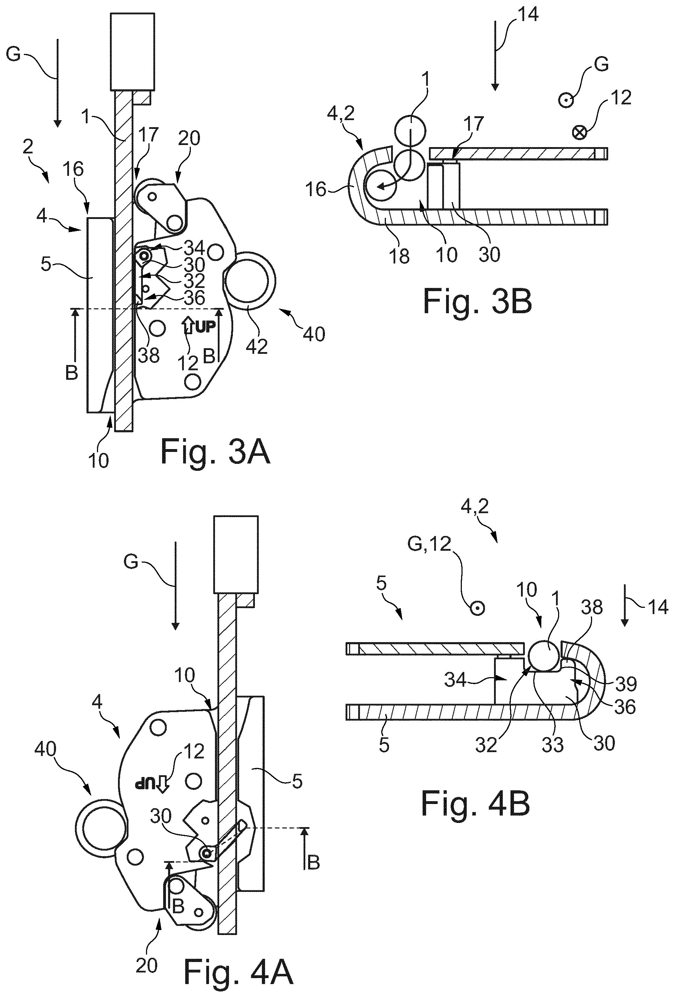

Figs. 1 and 2, and similarly Fig. 3 and 4, are different in that in Fig. 1 or 3 the first direction 12 points upwards and/or against gravity G and in Fig. 2 or 4 the first direction 12 points downwards and/or following gravity G. It follows that depending on the gravitational force an obstruction member 30 either does not obstruct the line receptacle 10 (Fig. 1 or 3) or obstructs the line receptacle 10 (Fig. 2 or 4).

The obstruction member 30 is configured for moving, namely pivoting, relative to the line receptacle 10 based on the influence of the gravity G or direction of gravity between an obstruction position obstructing the line receptacle 10 (as shown in Figs. 2 and 4) and an open position (as shown in Figs. 1 and 3) as a function of the first direction 12 oriented against the gravity G or following the gravity G. Thus, the first direction 12 is meant to point upwards or against gravity G so that the line receptacle 10 is not obstructed by means of an obstruction member 30 of the device 2.

The obstruction member 30 has a recess 32 configured for engaging with the line 1 in the obstruction position. With reference to Fig. 4B, the line 1 is received merely partially in the line receptacle 10 when the obstruction member 30 obstructs the line receptacle 10. The line 1 is stopped in a line or punctual contact on the obstruction member 30 and in a recess 32 of the obstruction member 30. The recess 32 advantageously realizes that the obstruction member 30 cannot pivot back and/or out of the line receptacle 10 unless the user actively removes the line 1 from the line receptacle 10, e.g. oblique to the first direction and/or in parallel to a second direction 14.

Presently, the obstruction member 30 is movably, namely rotatably, supported in the body 4, between the obstruction position (Figs. 2 and 4) and the open position (Figs. 1 and 3).

The obstruction member 30 extends substantially along a straight line between a first end 34 and a second end 36 of the obstruction member 30. The recess 32 is arranged between the first end 34 and the second end 36. The obstruction member 30 is pivotably mounted at the first end 34, wherein a pivoting axis is oriented perpendicular to the first direction 12 and/or in the second direction 14.

The recess 32 extends along the second direction 14 which is oriented perpendicular to the first direction 12. The obstruction member 30, namely the second end 36, comprises a protrusion 38 extending at least substantially along the second direction 14.

The protrusion 38 has a side surface 39 forming a side of the recess 32.

The protrusion 38, namely the side surface 39, is configured to contact the line 1 in the case the line 1 is moved oblique to the first direction 12 towards the protrusion, or in the case the obstruction member 30 is moved towards the open position while the line 1 is in contact with the obstruction member 30, cf. Fig. 4B.

In a top view of the recess 32, cf. Figs. 1 and 2, the side surface 39 is sectionally flat and sectionally curved. In a side view of the recess 32, cf. Fig. 4B, the side surface 39 is sectionally curved. The recess 32 has a flat top surface 33, cf. Fig. 4B, for a substantially linear contact to the line 1.

As can be particularly seen in Figs. 3B and 4B, the body 4 has a base member 5 monolithically forming a first side 16 and a bottom 18 of the receptacle 10. The first side 16 is concave on an inner surface at least sectionally along the receptacle 10. The inner surface is U-shaped or C-shaped with the opening of the C or U facing the line 1 to be received, cf. Fig. 3B. The line receptacle 10 can surround the line 1 when received around substantially half its circumference, cf. Fig. 3B.

The line guide 20, the obstruction member 30 and the arrest mechanism 40 are arranged on a second side 17 of the line receptacle 10 opposite the first side 16.

The first side 16, bottom 18, and the second side 17 together form at least substantially the C or U facing the line 1 to be received.

The device 2 has a rotatable line guide 20 configured for guiding a line 1 received in the line receptacle 10. The line guide 20 has a roller configured for guiding the line 1 received in the line receptacle 10. The roller itself can rotate in the line guide 20. The line guide 20 furthermore pivotable between a mounted position to sectionally surround the line 1 and a dismounted position to release the line 1. In Fig. 1 and 2, the line guide is in the mounted position in which the line 1 would be sectionally surrounded from the side. In Fig. 3 and 4, the line guide is in the dismounted position, wherein the line guide 20, particularly the roller, is arranged at a distance to the line.

It can be seen that bringing the line guide 20 from the mounted position into or towards the dismounted position includes to pivot the line guide 20 away from the line receptacle 10 and/or from the first side 16, cf. transition between Fig. 1 and 3.

The device 2 furthermore has an arrest mechanism 40 with a coupling member 42 for coupling to a user and with an arrest member 44 for arresting the line 1 in the line receptacle 10 in case of a fall of the user along the line 1. Particularly, the coupling member 42 and the arrest member 44 are monolithically formed and/or coupled with each other and thereby form a lever. The coupling member 42 has a substantially ring shaped opening for an easy coupling to the user.

The arrest mechanism 40 is pivotably held in the body 4. When the coupling member 42 receives a sufficiently high and/or abrupt pull force oriented substantially against the first direction 12 (e.g. following gravity G in Fig. 3A), the arrest member 44 engages with the line 1 and/or pivots towards the line receptacle 10 to arrest the device 2 by force fit and/or form fit.

The arrest mechanism 40 can be brought from a position in which it obstructs the line receptacle 10 as in Fig. 1 into a position in which the line receptacle 10 is not obstructed by the arrest mechanism 40, namely by the arrest member 44. In order to bring the arrest mechanism 40 from the one position (Fig. 1) to the other position (Fig. 3) in order to receive the line 1, the arrest mechanism 40 needs to be pivoted away from the line receptacle 10 and/or from the first side 16, cf. transition between Fig. 1 and 3.

The arrest mechanism 40 and the line guide 20 are spring-loaded to automatically move towards the line receptacle 10. Presently, the line guide 20 is configured to block the arrest mechanism 40 from being fully opened unless the line guide 20 is in the dismounted position. This is realized by the arrest mechanism 40 and the line guide 20 being constructed to engage with each other, sectionally blocking movements, as a function of their respective pivoting angle. In this way, the line receptacle 10 can only receive the line 1 when both the arrest mechanism 40 and the guide 20 are moved and/or pivoted away from the line receptacle 10; moving only one of the arrest mechanism 40 and the guide 20 is hence not sufficient.

In the present embodiment, the obstruction member 30 and the body 4, especially the base member 5, comprise a steel and/or an aluminum alloy.

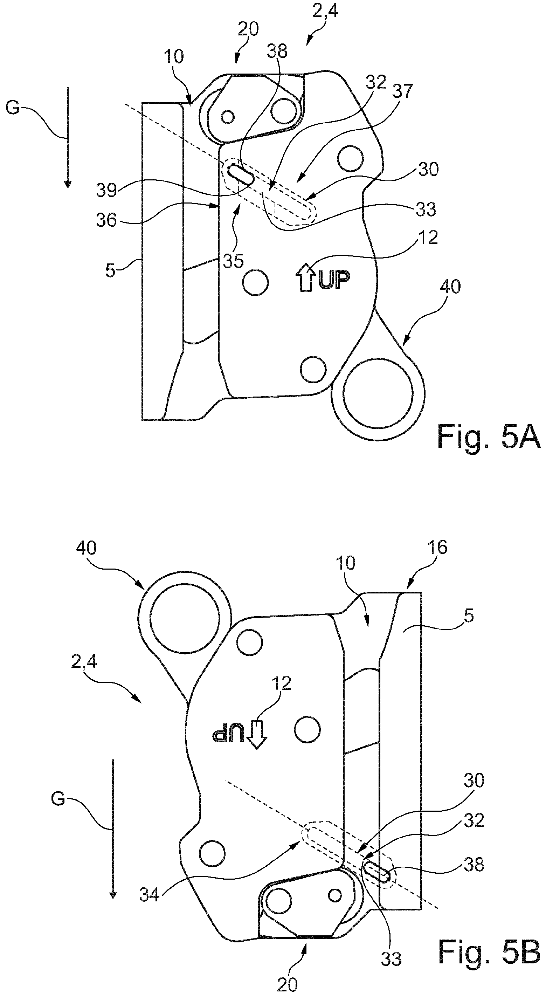

With reference to Fig. 5, an embodiment of the fall arrest device 2 is shown which is substantially modified relative to the embodiment described above. Different from the embodiment of Figs. 1 to 4, here the obstruction member 30 is not pivotable but rather translationally movable at least substantially along a straight line. The obstruction member 30 can slide freely in the body 4 to be taken with the gravitational forces as a function of the orientation of the device 2 relative to gravity G.

A front side 37 is configured to face upwards and a back side 35 is configured to face downwards in normal use of the device 2, cf. Fig. 5A.

The way of travel of the obstruction member 30 is oblique to the line receptacle 10 and/or the first direction 12 and configured to make the obstruction member 30 stop in order to obstruct the line receptacle 10 when the direction 12 points in a direction following gravity G. In Fig. 5B, the line receptacle 10 is obstructed and the obstruction member 30 has stopped at a first side 16 of the line receptacle 10.

The obstruction member 30 has a protrusion at a second end 36 and an inclined top surface 33. The protrusion 38 particularly has a side surface 39 which is curved or round.

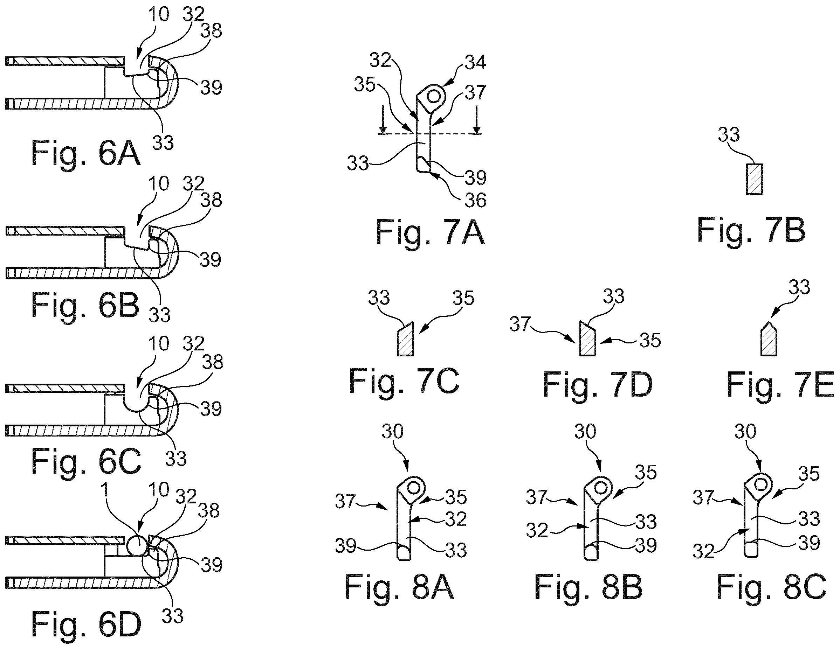

With reference to Fig. 6, difference shapes of the obstruction member 30, particularly its top surface 33 and the side surface 39 of the protrusion 38 are shown.

In Fig. 6A, the top surface 33 is inclined from the first end 34 towards the second end 36. The side surface 39 is curved.

In Fig. 6B, the top surface 33 is inclined from the second end 36 towards the first end 34. The side surface 39 is curved.

In Fig. 6C, the top surface 33 is curved between the first end 34 and the second end 36 and transitions into the side surface 39. Particularly, the top surface 33 has a round shape in a side view.

In Fig. 6D, the top surface 33 is flat between the first end 34 and the second end 36. The side surface 39 is curved.

With reference to Fig. 7, difference shapes of the obstruction member 30, particularly its top surface 33, are shown.

In Fig. 7A, it can be seen that the side surface 39 is sectionally curved or round and sectionally flat, especially in the top view.

In Fig. 7B, it can be seen that the top surface 33 is flat in a sectional view between the first end 34 and the second end 36.

In Fig. 7C, it can be seen that the top surface 33 is inclined in a sectional view between the first end 34 and the second end 36. The inclination is directed from the front side 37 to the back side 35.

In Fig. 7D, it can be seen that the top surface 33 is inclined in a sectional view between the first end 34 and the second end 36. The inclination is directed from the back side 35 to the front side 37.

In Fig. 7E it can be seen that the top surface 33 is tapered in a sectional view between the first end 34 and the second end 36.

With reference to Fig. 8, difference shapes of the obstruction member 30, particularly the side surface 39 of the protrusion 38, are shown.

In Fig. 8A it can be seen that the side surface 39 is curved in a top view. The curve form includes more than one radius.

In Fig. 8B it can be seen that the side surface 39 is curved in a top view. The curve form includes exactly one radius and/or is a circular form.

In Fig. 8C it can be seen that the side surface is sectionally curved and sectionally straight in a top view. Between two curved outer sections, a straight section is present.

### Reference signs list

- 1: line
- 2: fall arrest device
- 4: body
- 5: base member

- 10: line receptacle
- 12: first direction
- 14: second direction
- 16: first side
- 17: second side
- 18: bottom

- 20: line guide

- 30: obstruction member
- 32: recess
- 33: top surface
- 34: first end
- 35: back side
- 36: second end
- 37: front side
- 38: protrusion
- 39: side surface

- 40: arrest mechanism
- 42: coupling member
- 44: arrest member

## Claims

1. Fall arrest device (2) for attachment to a line (1), comprising
a body (4) with a line receptacle (10) defining a first direction (12) by its extension and for receiving the line (1) with the first direction (12) oriented in parallel to the line (1);
an obstruction member (30) configured for moving relative to the line receptacle (10) based on the influence of gravity (G) between an obstruction position obstructing the line receptacle (10) and an open position as a function of the first direction (12) oriented against the gravity (G) or following the gravity (G); and
an arrest mechanism (40) with a coupling member (42) for coupling to a user and with an arrest member (44) for arresting the line (1) in the line receptacle (10) in case of a fall of the user along the line (1), wherein the arrest member (44) is configured for engagement from a side into the line receptacle (10); wherein
the obstruction member (30) has a recess (32) configured for engaging with the line (1) in the obstruction position;
**characterized in that**
the recess (32) faces out of the line receptacle (10) when in the obstruction position.

2. Fall arrest device (2) according to any one of the preceding claims, wherein the obstruction member (30) is movably supported in the body (4), and wherein the obstruction member (30) is pivotable and/or translationally movable in the body (4) between the obstruction position and the open position.

3. Fall arrest device (2) according to any one of the preceding claims, wherein the obstruction member (30) extends, particularly at least substantially along a straight line, between a first end (34) and a second end (36) of the obstruction member (30), wherein the recess (32) is arranged between said ends (34, 36).

4. Fall arrest device (2) according to the preceding claim, wherein the obstruction member (30) is pivotably mounted at the first end (34).

5. Fall arrest device (2) according to any one of the preceding claims, wherein the recess (32) extends along a second direction (14) perpendicular to the first direction (12), and/or and wherein the obstruction member (30), especially the second end (36), comprises a protrusion (38) extending at least substantially along a/the second direction (14) perpendicular to the first direction (12).

6. Fall arrest device (2) according to the preceding claim, wherein the protrusion (38) has an at least sectionally curved side surface (39) forming a side of the recess (32) and particularly configured to contact the line (1) in terms of area or with a linear contact.

7. Fall arrest device (2) according to any one of the preceding two claims, wherein the protrusion (38) has an at least sectionally flat side surface (39) forming a side of the recess (32) and particularly configured to contact the line (1) in terms of area or with a linear contact.

8. Fall arrest device (2) according to any one of the preceding claims, wherein the recess (32) has a curved top surface (33) particularly configured to contact the line (1) in terms of area or with a linear contact.

9. Fall arrest device (2) according to any one of the preceding claims, wherein the recess (32) has an inclined top surface (33) particularly configured to contact the line (1) with a punctual contact.

10. Fall arrest device (2) according to any one of the preceding claims, wherein the recess (32) has a tapered top surface (33) particularly configured to contact the line (1) with a punctual contact.

11. Fall arrest device (2) according to any one of the preceding claims, wherein the body (4) has a base member (5) monolithically forming a first side (16) and a bottom (18) of the line receptacle (10), wherein the first side (16) is concave on an inner surface at least sectionally along the receptacle (10).

12. Fall arrest device (2) according to any one of the preceding claims, comprising a rotatable line guide (20) configured for guiding a line (1) received in the line receptacle (10), particularly wherein the line guide (20) has a roller configured for guiding the line (1) received in the line receptacle (10) and/or is pivotable between a mounted position to sectionally surround the line (1) and a dismounted position to release the line (1).

13. Fall arrest device (2) according to the preceding claim, wherein the arrest mechanism (40) and the line guide (20) are spring-loaded to automatically move towards the line receptacle (10).

14. Fall arrest device (2) according to the preceding claim, wherein the line guide (20) is configured to block the arrest mechanism (40) from being fully opened unless the line guide (20) is in the dismounted position.

15. Fall arrest device (2) according to any one of the preceding claims, wherein the obstruction member (30) and/or the body (4) comprises or consists of steel and/or aluminum alloy, and/or wherein the line guide (20), the obstruction member (30) and/or the arrest mechanism (40) is/are arranged on a second side (17) of the line receptacle (10) opposite the first side (16).

## Patentansprüche

1. Fallschutzvorrichtung (2) zum Befestigen an einem Seil (1), aufweisend:
einen Körper (4) mit einer Seilaufnahme (10), die durch ihre Ausdehnung eine erste Richtung (12) definiert und dazu dient, das Seil (1) mit der ersten Richtung (12) parallel zum Seil (1) ausgerichtet aufzunehmen;
ein Blockierelement (30), das derart konfiguriert ist, dass es sich unter dem Einfluss der Schwerkraft (G) relativ zur Seilaufnahme (10) zwischen einer Blockierposition, in der es die Seilaufnahme (10) blockiert, und einer offenen Position als Funktion davon bewegt, ob die erste Richtung (12) entgegen der Schwerkraft (G) oder in Richtung der Schwerkraft (G) ausgerichtet ist; und
einen Fangmechanismus (40) mit einem Kupplungselement (42) zum Koppeln mit einem Benutzer und mit einem Fangelement (44) zum Arretieren des Seils (1) in der Seilaufnahme (10) im Falle eines Sturzes des Benutzers entlang des Seils (1), wobei das Fangelement (44) dafür konfiguriert ist, von einer Seite mit der Seilaufnahme (10) in Eingriff zu kommen, wobei
das Blockierelement (30) eine Vertiefung (32) aufweist, die dafür konfiguriert ist, in der Blockierposition mit dem Seil (1) in Eingriff zu kommen;
**dadurch gekennzeichnet, dass**
die Vertiefung (32) in der Blockierposition von der Seilaufnahme (10) nach außen hervorsteht.

2. Fallschutzvorrichtung (2) nach Anspruch 1, wobei
das Blockierelement (30) im Körper (4) bewegbar gehalten wird und wobei das Blockierelement (30) im Körper (4) zwischen der Blockierposition und der offenen Position schwenkbar und/oder translatorisch bewegbar ist.

3. Fallschutzvorrichtung (2) nach einem der vorangehenden Ansprüche, wobei
sich das Blockierelement (30) insbesondere zumindest im Wesentlichen entlang einer geraden Linie zwischen einem ersten Ende (34) und einem zweiten Ende (36) des Blockierelements (30) erstreckt, wobei die Vertiefung (32) zwischen den Enden (34, 36) angeordnet ist.

4. Fallschutzvorrichtung (2) nach einem der vorangehenden Ansprüche, wobei das Blockierelement (30) am ersten Ende (34) schwenkbar montiert ist.

5. Fallschutzvorrichtung (2) nach einem der vorangehenden Ansprüche, wobei sich die Vertiefung (32) entlang einer zweiten Richtung (14) senkrecht zur ersten Richtung (12) erstreckt, und/oder wobei das Blockierelement (30), insbesondere das zweite Ende (36), einen Vorsprung (38) aufweist, der sich zumindest im Wesentlichen entlang einer/der zweiten Richtung (14) senkrecht zur ersten Richtung (12) erstreckt.

6. Fallschutzvorrichtung (2) nach einem der vorangehenden Ansprüche, wobei der Vorsprung (38) eine zumindest abschnittsweise gekrümmte Seitenfläche (39) aufweist, die eine Seite der Vertiefung (32) bildet und insbesondere derart konfiguriert ist, dass sie mit dem Seil (1) in Flächenkontakt oder in Linienkontakt kommt.

7. Fallschutzvorrichtung (2) nach einem der beiden vorangehenden Ansprüche, wobei der Vorsprung (38) eine zumindest abschnittsweise flache Seitenfläche (39) aufweist, die eine Seite der Vertiefung (32) bildet und insbesondere derart konfiguriert ist, dass sie mit dem Seil (1) in Flächenkontakt oder in Linienkontakt kommt.

8. Fallschutzvorrichtung (2) nach einem der vorangehenden Ansprüche, wobei die Vertiefung (32) eine gekrümmte obere Fläche (33) aufweist, die insbesondere derart konfiguriert ist, dass sie mit dem Seil (1) in Flächenkontakt oder in Linienkontakt kommt.

9. Fallschutzvorrichtung (2) nach einem der vorangehenden Ansprüche, wobei die Vertiefung (32) eine geneigte obere Fläche (33) aufweist, die insbesondere derart konfiguriert ist, dass sie mit dem Seil (1) in Punktkontakt kommt.

10. Fallschutzvorrichtung (2) nach einem der vorangehenden Ansprüche, wobei die Vertiefung (32) eine sich verjüngende obere Fläche (33) aufweist, die insbesondere derart konfiguriert ist, dass sie mit dem Seil (1) in Punktkontakt kommt.

11. Fallschutzvorrichtung (2) nach einem der vorangehenden Ansprüche, wobei der Körper (4) ein Basiselement (5) aufweist, das monolithisch eine erste Seite (16) und einen Boden (18) der Seilaufnahme (10) bildet, wobei die erste Seite (16) an einer Innenfläche zumindest abschnittsweise entlang der Aufnahme (10) konkav ist.

12. Fallschutzvorrichtung (2) nach einem der vorangehenden Ansprüche, aufweisend eine drehbare Seilführung (20), die dafür konfiguriert ist ein in der Seilaufnahme (10) aufgenommenes Seil (1) zu führen, wobei insbesondere die Seilführung (20) eine Rolle aufweist, die dafür konfiguriert ist, das in der Seilaufnahme (10) aufgenommene Seil (1) zu führen, und/oder zwischen einer montierten Position, in der sie das Seil (1) abschnittsweise umgibt, und einer demontierten Position schwenkbar ist, in der sie das Seil (1) freigibt.

13. Fallschutzvorrichtung (2) nach dem vorangehenden Anspruch, wobei der Fangmechanismus (40) und die Seilführung (20) durch eine Feder vorgespannt sind, so dass sie sich automatisch in Richtung zur Seilaufnahme (10) bewegen.

14. Fallschutzvorrichtung (2) nach dem vorangehenden Anspruch, wobei die Seilführung (20) dafür konfiguriert ist, zu verhindern, dass der Fangmechanismus (40) vollständig geöffnet wird, solange sich die Seilführung (20) nicht in der demontierten Position befindet.

15. Fallschutzvorrichtung (2) nach einem der vorangehenden Ansprüche, wobei das Blockierelement (30) und/oder der Körper (4) Stahl und/oder eine Aluminiumlegierung aufweist oder daraus besteht, und/oder wobei die Seilführung (20), das Blockierelement (30) und/oder der Fangmechanismus (40) auf einer zweiten Seite (17) der Seilaufnahme (10) gegenüber der ersten Seite (16) angeordnet ist/sind.

## Revendications

1. Dispositif d'arrêt de chute (2) pour fixation à une ligne (1), comprenant
un corps (4) avec un réceptacle de ligne (10) définissant un premier sens (12) par son extension et destiné à recevoir la ligne (1) avec le premier sens (12) orienté en parallèle à la ligne (1) ;
un élément d'obstruction (30) conçu pour se déplacer par rapport au réceptacle de ligne (10) en se basant sur l'influence de la gravité (G) entre une position d'obstruction obstruant le réceptacle de ligne (10) et une position ouverte en fonction du fait que le premier sens (12) est orienté à l'opposé de la gravité (G) ou en suivant la gravité (G) ; et
un mécanisme d'arrêt (40) avec un élément de couplage (42) destiné à être couplé à un utilisateur et avec un élément d'arrêt (44) pour arrêter la ligne (1) dans le réceptacle de ligne (10) dans le cas d'une chute de l'utilisateur le long de la ligne (1), dans lequel l'élément d'arrêt (44) est conçu pour venir en prise depuis un côté dans le réceptacle de ligne (10) ; dans lequel
l'élément d'obstruction (30) présente un évidement (32) conçu pour venir en prise avec la ligne (1) dans la position d'obstruction ;
**caractérisé en ce que**
l'évidement (32) fait face à l'extérieur du réceptacle de ligne (10) lorsqu'il est dans la position d'obstruction.

2. Dispositif d'arrêt de chute (2) selon l'une quelconque des revendications précédentes, dans lequel l'élément d'obstruction (30) est soutenu de manière mobile dans le corps (4), et dans lequel l'élément d'obstruction (30) peut pivoter et/ou se déplacer en translation dans le corps (4) entre la position d'obstruction et la position ouverte.

3. Dispositif d'arrêt de chute (2) selon l'une quelconque des revendications précédentes, dans lequel l'élément d'obstruction (30) s'étend, en particulier au moins essentiellement le long d'une ligne droite, entre une première extrémité (34) et une seconde extrémité (36) de l'élément d'obstruction (30), dans lequel l'évidement (32) est agencé entre lesdites extrémités (34, 36).

4. Dispositif d'arrêt de chute (2) selon la revendication précédente, dans lequel l'élément d'obstruction (30) est monté de manière pivotante au niveau de la première extrémité (34).

5. Dispositif d'arrêt de chute (2) selon l'une quelconque des revendications précédentes, dans lequel l'évidement (32) s'étend le long d'un second sens (14) perpendiculaire au premier sens (12), et/ou dans lequel l'élément d'obstruction (30), spécialement la seconde extrémité (36), comprend une saillie (38) s'étendant au moins essentiellement le long d'un/du second sens (14) perpendiculaire au premier sens (12).

6. Dispositif d'arrêt de chute (2) selon la revendication précédente, dans lequel la saillie (38) a une surface latérale (39) incurvée au moins par sections formant un côté de l'évidement (32) et en particulier conçue pour entrer en contact avec la ligne (1) en termes de surface ou avec un contact linéaire.

7. Dispositif d'arrêt de chute (2) selon l'une quelconque des deux revendications précédentes, dans lequel la saillie (38) a une surface latérale (39) plane au moins par sections formant un côté de l'évidement (32) et en particulier conçue pour entrer en contact avec la ligne (1) en termes de surface ou avec un contact linéaire.

8. Dispositif d'arrêt de chute (2) selon l'une quelconque des revendications précédentes, dans lequel l'évidement (32) a une surface supérieure (33) incurvée en particulier conçue pour entrer en contact avec la ligne (1) en termes de surface ou avec un contact linéaire.

9. Dispositif d'arrêt de chute (2) selon l'une quelconque des revendications précédentes, dans lequel l'évidement (32) a une surface supérieure (33) inclinée en particulier configurée pour entrer en contact avec la ligne (1) avec un contact ponctuel.

10. Dispositif d'arrêt de chute (2) selon l'une quelconque des revendications précédentes, dans lequel l'évidement (32) a une surface supérieure (33) conique en particulier conçue pour entrer en contact avec la ligne (1) avec un contact ponctuel.

11. Dispositif d'arrêt de chute (2) selon l'une quelconque des revendications précédentes, dans lequel le corps (4) présente un élément de base (5) formant de manière monolithique un premier côté (16) et un fond (18) du réceptacle de ligne (10), dans lequel le premier côté (16) est concave sur une surface intérieure au moins par sections le long du réceptacle (10).

12. Dispositif d'arrêt de chute (2) selon l'une quelconque des revendications précédentes, comprenant un guide de ligne tournant (20) conçu pour guider une ligne (1) reçue dans le réceptacle de ligne (10), en particulier dans lequel le guide de ligne (20) présente un rouleau conçu pour guider la ligne (1) reçue dans le réceptacle de ligne (10) et/ou peut pivoter entre une position montée pour entourer par sections la ligne (1) et une position démontée pour libérer la ligne (1).

13. Dispositif d'arrêt de chute (2) selon la revendication précédente, dans lequel le mécanisme d'arrêt (40) et le guide de ligne (20) sont chargés par ressort pour se déplacer automatiquement vers le réceptacle de ligne (10).

14. Dispositif d'arrêt de chute (2) selon la revendication précédente, dans lequel le guide de ligne (20) est conçu pour empêcher le mécanisme d'arrêt (40) de s'ouvrir entièrement à moins que le guide de ligne (20) ne soit dans la position démontée.

15. Dispositif d'arrêt de chute (2) selon l'une quelconque des revendications précédentes, dans lequel l'élément d'obstruction (30) et/ou le corps (4) comprend ou est constitué d'acier et/ou d'alliage d'aluminium, et/ou dans lequel le guide de ligne (20), l'élément d'obstruction (30) et/ou le mécanisme d'arrêt (40) sont agencés sur un second côté (17) du réceptacle de ligne (10) opposé au premier côté (16).
